# EUROPÄISCHE PATENTSCHRIFT

(11) **EP 2 278 250 B1**
(45) Veröffentlichungstag und Bekanntmachung des Hinweises auf die Patenterteilung: **15.06.2016**
(21) Anmeldenummer: 10167375.4
(22) Anmeldetag: 25.06.2010
(51) Int. Cl.: F28D 20/02

(54) **Latentwärmespeicher und zugehöriges Befüllungsverfahren**
Latent heat storage and process for filling the same
Stockage de chaleur à changement de phase et son procédé de remplissage

(30) Priorität: 24.07.2009 DE 102009034654
(43) Veröffentlichungstag der Anmeldung: 26.01.2011
(73) Patentinhaber: Eberspächer Exhaust Technology GmbH & Co. KG, 66539 Neunkirchen (DE)
(72) Erfinder: Gaiser, Gerd, 72768, Reutlingen (DE)
(74) Vertreter: BRP Renaud & Partner mbB Rechtsanwälte Patentanwälte Steuerberater

(56) Entgegenhaltungen:
- EP-A1- 0 116 503
- EP-A1- 0 158 378
- DE-A1- 4 021 492
- DE-A1-102006 037 760
- DE-B3-102004 055 475
- DE-C1- 19 937 730

## Beschreibung

Die vorliegende Erfindung betrifft einen Latentwärmespeicher für eine Abgasanlage einer Brennkraftmaschine, insbesondere eines Kraftfahrzeugs. Die Erfindung betrifft außerdem ein Verfahren zum Befüllen eines derartigen Latentwärmespeichers.

Aus der DE 10 2004 052106 A1 und aus der DE 10 2004 052107 A1 sind Latentwärmespeicher für Abgasanlagen von Brennkraftmaschinen bekannt, die mit einem Phasenwechselmaterial arbeiten. Ein derartiges Phasenwechselmaterial charakterisiert sich dadurch, dass es bei der jeweils gewünschten Speichertemperatur einen Phasenwechsel zwischen flüssiger Phase und fester Phase durchführt. Beim Aufladen des Latentwärmespeichers schmilzt das Phasenwechselmaterial, nimmt also seine Flüssigphase ein. Bei der Entladung des Latentwärmespeichers erstarrt das Phasenwechselmaterial, nimmt also seine Festphase ein. Derartige Phasenwechselmaterialien sind insbesondere Salze.

Ein weiterer Latentwärmespeicher, gemäß dem Oberbegriff des Anspruchs 1, ist aus der EP 0 116 503 bekannt.

Ein zentrales Problem derartiger Latentwärmespeicher ist die Schmelzdehnung des Phasenwechselmaterials beim jeweiligen Phasenwechsel. Diese Dehnung kann je nach Material zwischen 5% und 20% betragen. Dabei führt jeder Schmelzvorgang zu einer Ausdehnung des Phasenwechselmaterials, die bei der Erstarrung zu einer entsprechenden Kontraktion führt. Derartige Materialdehnungen können zu einer extremen Belastung von mit dem Phasenwechselmaterial befüllten Speicherräumen führen.

Die vorliegende Erfindung beschäftigt sich mit dem Problem, für einen Latentwärmespeicher bzw. für ein zugehöriges Herstellungsverfahren eine verbesserte Ausführungsform anzugeben, die sich insbesondere dadurch auszeichnet, dass die Belastung des Latentwärmespeichers durch Materialdehnungen beim Phasenwechsel reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein Speichervolumen, das in einem mit dem Phasenwechselmaterial befüllten Hohlraum vorhanden ist, so zu bemessen, dass es sowohl ein Basisvolumen, welches das Phasenwechselmaterial im erstarrten Zustand einnimmt, als auch ein Dehnvolumen umfasst, welches das Phasenmaterial im geschmolzenen Zustand zusätzlich zum Basisvolumen einnimmt. Mit anderen Worten, das im jeweiligen Hohlraum bereitgestellte Speichervolumen berücksichtigt bereits die Materialdehnung beim Aufschmelzen des Phasenwechselmaterials. Hierdurch kann eine Dehnbelastung eines den Hohlraum bildenden Gehäuses beim Schmelzvorgang erheblich reduziert werden.

Besonders vorteilhaft ist eine Ausführungsform, bei welcher das Dehnvolumen zum einen die Schmelzausdehnung des Phasenwechselmaterials und zum anderen auch eine Temperaturausdehnung des Phasenwechselmaterials berücksichtigt, die das flüssige Phasenwechselmaterial bis zum Erreichen einer vorbestimmten maximalen Betriebstemperatur des Latentwärmespeichers durchläuft. Diese Ausführungsform berücksichtigt die Erkenntnis, dass die Phasenwechseltemperatur, also die Schmelztemperatur des Phasenwechselmaterials üblicherweise unterhalb der üblichen Betriebstemperaturen des Latentwärmespeichers liegt. Um nun auch bis zum Erreichen der maximalen Betriebstemperatur des Latentwärmespeichers eine übermäßige Spannungsbelastung des den Hohlraum definierenden Körpers auf zulässige Werte zu begrenzen, erfolgt die entsprechende Berücksichtigung der thermischen Ausdehnung des flüssigen Phasenwechselmaterials in dem Volumen.

Zusätzlich oder alternativ kann das Dehnvolumen bei einer anderen Ausführungsform einen vorbestimmten maximalen Betriebsdruck im jeweiligen Hohlraum berücksichtigen, den das flüssige Phasenwechselmaterial bei einer vorbestimmten maximalen Betriebstemperatur des Latentwärmespeichers im Hohlraum erzeugen darf. Auch diese Maßnahme führt zu einer Optimierung des Dehnvolumens und somit des Speichervolumens, um die Spannungsbelastung des den Hohlraum bildenden Körpers zu reduzieren bzw. auf zulässige Werte zu begrenzen.

Der jeweilige Hohlraum kann entsprechend einer anderen Ausführungsform dicht ausgestaltet sein. Zusätzlich kann dann das Dehnvolumen so gewählt werden, dass sich beim Erstarren des Phasenwechselmaterials im Hohlraum ein Unterdruck ausbildet. Dieser Unterdruck kann nun insbesondere gemäß einer vorteilhaften Weiterbildung gezielt so eingestellt werden, dass sich im flüssigen Phasenwechselmaterial ein vorbestimmter Betriebsdruck einstellt, wenn der Latentwärmespeicher in seinem üblichen Betriebstemperaturbereich betrieben wird. Eine derartige Auslegung ist insbesondere dann von Vorteil, wenn die Betriebstemperaturen des Latentwärmespeichers vergleichsweise hoch sind und beispielsweise ein Sieden im flüssigen Phasenwechselmaterial vermieden werden soll.

Der jeweilige Hohlraum ist so gestaltet bzw. beschaffen, dass die Erstarrung des Phasenwechselmaterials in räumlich verteilten Mikrozonen erfolgt, so dass im erstarrten Zustand das Basisvolumen und das Dehnvolumen vermischt sind. Diese Bauart hat den Vorteil, dass beim Aufschmelzen des Phasenwechselmaterials die Materialdehnung räumlich verteilt im gesamten Speichervolumen stattfindet. Hierdurch kann die Entstehung lokaler Überdrücke bzw. kritischer Spannungszustände reduziert bzw. vermieden werden. Zu derartigen kritischen Zuständen kann es beispielsweise dann kommen, wenn beim Aufschmelzen des Phasenwechselmaterials erste Bereiche früher aufschmelzen als zweite Bereiche und wenn die zweiten Bereiche eine Ausdehnung der ersten Bereiche blockieren. Durch die Erstarrung in räumlich verteilten Mikrozonen erfolgt auch das Aufschmelzen in diesen Mikrozonen, also räumlich verteilt. Die Entstehung eingeschlossener aufschmelzender Bereiche kann dadurch vermieden bzw. reduziert werden.

Der jeweilige Hohlraum weist zu diesem Zweck eine Kapillarstruktur auf, die beim Erstarren die räumlich verteilten Mikrozonen erzeugt. Die Kapillarkräfte können im jeweiligen Hohlraum dafür sorgen, dass das flüssige Phasenwechselmaterial auch bei sinkenden Temperaturen und insbesondere beim Erstarren räumlich verteilt bleibt.

Zusätzlich sind im jeweiligen Hohlraum mehrere Teil-Hohlräume ausgebildet, die über Engstellen und/oder über Umlenkstellen miteinander kommunizierend verbunden sind. Zusätzlich kann auch vorgesehen sein, den jeweiligen Hohlraum an seinen Wänden mit einer Oberflächenstruktur auszustatten, die eine Benetzung mit dem flüssigen Phasenwechselmaterial verbessert. Auch hierdurch kann ein Zusammenfließen des flüssigen Phasenwechselmaterials beim Erstarren behindert oder verhindert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte Schnittdarstellung eines Latentwärmespeichers,
- Fig. 2: Schnittansichten wie in Fig. 1 im Flüssigzustand (a) und im Festzustand (b),
- Fig. 3: eine Schnittansicht wie in Fig. 1, jedoch bei einem anderen Beispiel,
- Fig. 4: Schnittansichten wie in Fig. 1, jedoch bei einer erfindungsgemäßen Ausführungsform im Flüssigzustand (a) und im Festzustand (b).

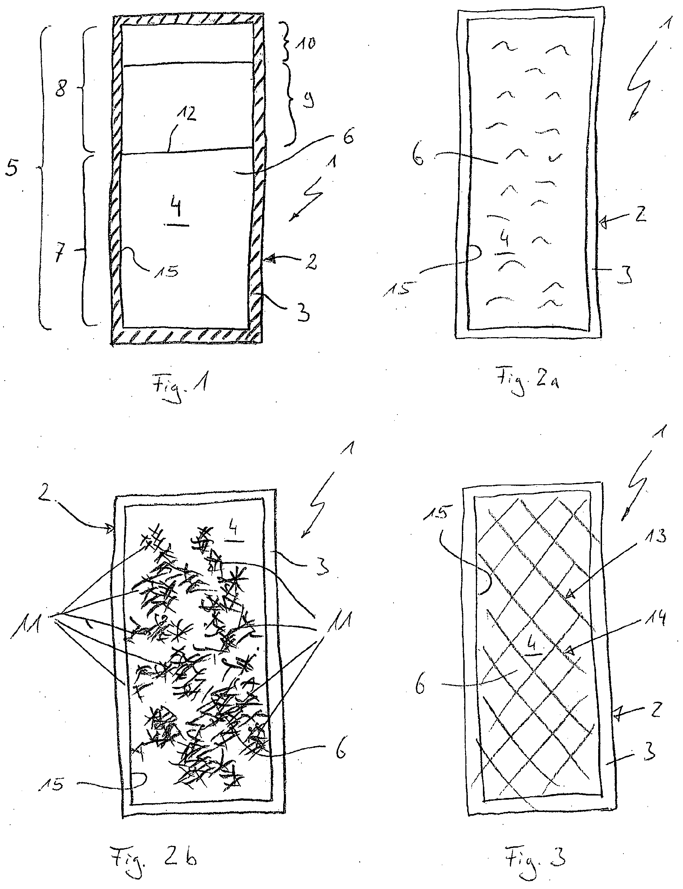

Entsprechend den Fig. 1 - 4 umfasst ein Latentwärmespeicher 1, der in einer hier nicht gezeigten Abgasanlage einer Brennkraftmaschine, die sich bevorzugt in einem Kraftfahrzeug befinden kann, zur Anwendung kommt, ein Gehäuse 2, dessen Wände 3 zumindest einen Hohlraum 4 umschließen. Im Beispiel ist jeweils nur ein einziger Hohlraum 4 dargestellt. Es ist klar, dass grundsätzlich auch mehrere derartige Hohlräume 4 im Gehäuse 2 bzw. im Latentwärmespeicher 1 enthalten sein können. Der jeweilige Hohlraum 4 umfasst dabei bzw. definiert ein durch eine geschweifte Klammer gekennzeichnetes Speichervolumen 5, in dem ein Phasenwechselmaterial 6 enthalten ist. Das heißt, der Hohlraum 4 bzw. dessen Speichervolumen 5 ist mehr oder weniger mit dem Phasenwechselmaterial 6 befüllt.

Entsprechend Fig. 1 ist das Speichervolumen 5 dabei so bemessen bzw. dimensioniert, dass es ein durch eine geschweifte Klammer gekennzeichnetes Basisvolumen 7 sowie ein durch eine geschweifte Klammer gekennzeichnetes Dehnvolumen 8 umfasst. Mit anderen Worten, das Basisvolumen 7 und das Dehnvolumen 8 bilden gemeinsam das Speichervolumen 5. Das Basisvolumen 7 ist durch dasjenige Volumen gebildet, das vom Phasenwechselmaterial 6 in dessen erstarrten Zustand eingenommen wird. Dabei kann das Basisvolumen 7 die maximale thermische Ausdehnung des Phasenwechselmaterials 6 in dessen Festphase berücksichtigen, die in der Regel bei der Erstarrungstemperatur auftritt. Im Unterschied dazu berücksichtigt das Dehnvolumen 8 dasjenige Volumen, das vom Phasenwechselmaterial 6 im geschmolzenen Zustand zusätzlich eingenommen wird. Beim Phasenübergang von fest zu flüssig dehnt sich das Phasenwechselmaterial 6 aus. Diese Materialausdehnung wird vom Dehnvolumen 8 erfasst. Die Verhältnisse von Basisvolumen 7 zu Dehnvolumen 8 sind in Fig. 1 übertrieben groß dargestellt. Üblicherweise beträgt das Dehnvolumen 8 zwischen 5% und 20% des Basisvolumens 7. Diese Zahlen sind dabei rein exemplarisch.

Das Dehnvolumen 8 kann nun entsprechend Fig. 1 zum einen eine mit einer geschweiften Klammer gekennzeichnete Schmelzausdehnung 9 des Phasenwechselmaterials 6 und zum anderen eine durch eine geschweifte Klammer gekennzeichnete Temperaturausdehnung 10 des Phasenwechselmaterials 6 berücksichtigen. Die Schmelzausdehnung 9 ergibt sich beim Phasenübergang, also bei der Schmelztemperatur des Phäsenwechselmaterials 6. Ausgehend vom Volumen, welches das Phasenwechselmaterial 6 bei seiner Schmelztemperatur aufweist, kann sich das flüssige Phasenwechselmaterial 6 mit zunehmender Temperatur weiter ausdehnen. Die Temperaturausdehnung 10 berücksichtigt nun die Volumenzunahme des flüssigen Phasenwechselmaterials 6, die sich dann einstellt, wenn das flüssige Phasenwechselmaterial 6 eine vorbestimmte maximale Betriebstemperatur des Latentwärmespeichers 1 erreicht. Beispielsweise kann der Latentwärmespeicher 1 auf eine maximale Abgastemperatur von 400°C ausgelegt sein. Die übliche Betriebstemperatur des Latentwärmespeichers 1 kann dabei in einem Betriebstemperaturbereich von 350 bis 380°C liegen. Auch hier sind die Zahlenwerte nur exemplarisch zu verstehen. Durch die Berücksichtigung der Temperaturausdehnung 10 kann die Belastung des Gehäuses 2 auch bei Erreichen der maximalen Betriebstemperatur auf zulässige Werte begrenzt werden.

Des Weiteren ist es grundsätzlich möglich, das Dehnvolumen 8 so zu wählen, dass dabei außerdem ein vorbestimmter maximaler Betriebsdruck im jeweiligen Hohlraum 4 berücksichtigt wird. Das Gehäuse 2 kann bis zu einem vorbestimmten maximalen Betriebsdruck ausgelegt werden, der beispielsweise bei 10 bar liegen kann. Das Dehnvolumen 8 wird nun so berechnet, dass sich bei der vorbestimmten maximalen Betriebstemperatur des Latentwärmespeichers 1 der zuvor genannte maximal zulässige Betriebsdruck im flüssigen Phasenwechselmaterial 6 innerhalb des Hohlraums 4 einstellt.

Um Differenzdrücke zwischen dem Hohlraum 4 und einer nicht näher bezeichneten Umgebung des Gehäuses 2 ohne Leckage realisieren zu können, ist das Gehäuse 2 bzw. der jeweilige Hohlraum 4 entsprechend dicht ausgeführt. Bei einem dichten Hohlraum 4 kann das Dehnvolumen 8 bei einer anderen Ausführungsform gezielt auch so ausgewählt werden, dass sich bei erstarrtem Phasenwechselmaterial 6 im Hohlraum 4 ein Unterdruck ausbildet. Durch entsprechende Berechnung des Dehnvolumens 8 kann dieser Unterdruck gezielt realisiert werden. Beispielsweise kann für das erstarrte Phasenwechselmaterial 6 im Hohlraum 4 ein Unterdruck eingestellt werden, der so bemessen ist, dass sich bei verflüssigtem Phasenwechselmaterial 6 ein vorbestimmter Betriebsdruck im Phasenwechselmaterial 6 einstellt, der oberhalb des Umgebungsdrucks liegt. Insbesondere kann der Unterdruck, der sich bei erstarrtem Phasenwechselmaterial 6 im Hohlraum 4 einstellt, so ausgelegt bzw. bemessen werden, dass der zuvor genannte vorbestimmte Betriebsdruck, der im flüssigen Phasenwechselmaterial 6 herrschen soll, dann vorliegt, wenn der Latentwärmespeicher 1 in seinem vorbestimmten Betriebstemperaturbereich betrieben wird. Durch eine derartige Auslegung können somit die üblicherweise im Betrieb des Latentwärmespeichers 1 auftretenden thermischen Dehnungseffekte vollständig berücksichtigt werden, wodurch sich eine minimale Belastung des für das Gehäuse 2 bzw. für dessen Wände 3 verwendeten Werkstoffs einstellt.

Fig. 2a zeigt einen Zustand, bei dem das Phasenwechselmaterial 6 vollständig verflüssigt ist. Bei entsprechender Auslegung des Speichervolumens 5 ist der gesamte Hohlraum 4 vom flüssigen Phasenwechselmaterial 6 ausgefüllt. Bevorzugt ist der Hohlraum 4 nun so ausgestaltet bzw. beschaffen, dass die Erstarrung des Phasenwechselmaterials 6 entsprechend Fig. 2b in räumlich verteilten Mikrozonen 11 erfolgt. Im erstarrten Zustand sind gemäß Fig. 2b dadurch das Basisvolumen 7 und das Dehnvolumen 8 durchmischt und auf den Hohlraum 4 verteilt. Insbesondere soll die in Fig. 1 durch eine Linie 12 angedeutete Schichtung oder Aufteilung vermieden werden, bei der ein Teil des Hohlraums 4 vollständig mit einem massiven Block aus erstarrtem Phasenwechselmaterial 6 befüllt ist, während der Hohlraum 4 im Übrigen leer ist. Die räumlich verteilten Mikrozonen 11 der Erstarrung des Phasenwechselmaterials 6 haben beim Schmelzen des Phasenwechselmaterials 6 entsprechend räumlich verteilte Schmelzzonen zur Folge. Insbesondere kann eine Verkapselung von Schmelzzonen innerhalb von erstarrten Bereichen des Phasenwechselmaterials 6, die zu einer Beschädigung des Gehäuses 2 führen könnten, vermieden werden.

Um bei der Erstarrung des Phasenwechselmaterials 6 eine derartige räumliche Verteilung von Mikro-Erstarrungszonen 11 zu erreichen, ist der Hohlraum 4 entsprechend Fig. 3 beispielsweise mit einer Kapillarstruktur 13 ausgestattet. Eine derartige Kapillarstruktur 13 kann beispielsweise mittels einer den Hohlraum 4 ausfüllenden räumlichen Struktur 14 realisiert werden, die für das Phasenwechselmaterial 6 schwammartig wirkt. Beispielsweise kann diese Struktur 14 aus einem porösen Material bestehen und sich durch eine extrem große Oberfläche auszeichnen. Zusätzlich oder alternativ ist es möglich, die Wände 3 des Gehäuses 2, die den Hohlraum 4 umschließen, mit einer Oberflächenstruktur 15 auszustatten, die eine verbesserte Haftung bzw. Benetzung des flüssigen Phasenwechselmaterials 6 ermöglicht. Hierdurch kann ein Zusammenfließen des Phasenwechselmaterials 6 beim Erstarren behindert werden, was die Ausbildung der räumlich verteilten Mikro-Erstarrungszonen 11 begünstigt.

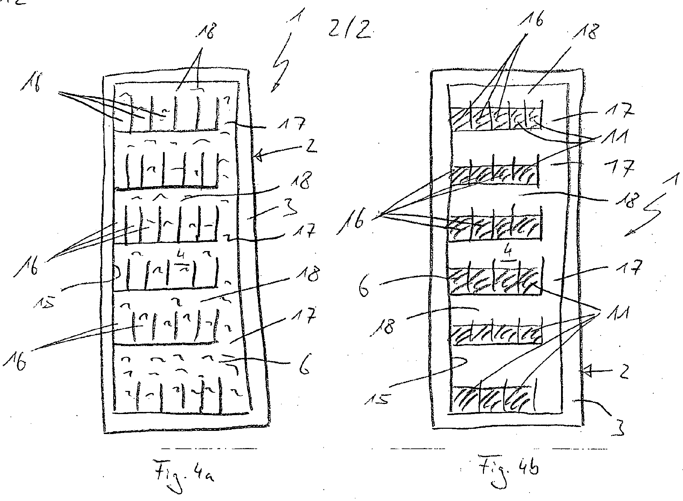

Die Fig. 4a und 4b zeigen eine erfindungsgemäße Ausführungsform, bei welcher der jeweilige Hohlraum 4 eine Vielzahl von Teil-Hohlräumen 16 umfasst, die über Umlenkstellen 17 bzw. über Engstellen 18 miteinander kommunizierend verbunden sind. In Fig. 4a ist der gesamte Hohlraum 4 durch das verflüssigte Phasenwechselmaterial 6 ausgefüllt. Beim Erstarren sammelt sich das Phasenwechselmaterial in den Teil-Hohlräumen 16, wobei die Umlenkstellen 17 bzw. die Engstellen 18 dann eine Verbindung des Phasenwechselmaterials 6 zwischen den Teil-Hohlräumen 16 behindern. Hierdurch werden innerhalb der Teil-Hohlräume 16 die Mikro-Erstarrungszonen 11 ausgebildet. Beim Verflüssigen kann sich das Phasenwechselmaterial 6 innerhalb der einzelnen Teil-Hohlräume 16 ungehindert ausdehnen, ohne dass es dabei zu Beschädigungen des Gehäuses 2 kommt.

Der hier vorgestellte Latentwärmespeicher 1 kann auf unterschiedliche Weisen hergestellt werden. Bei dem erfindungsgemäßen Befüllungsverfahren wird das Phasenwechselmaterial 6 im erstarrten Zustand als Schüttung oder in Form wenigstens eines vorgefertigten Formkörpers in den jeweiligen Hohlraum 4 eingebracht. Der Hohlraum 4 wird dann mit einem vorbestimmten Unterdruck beaufschlagt und in diesem evakuierten Zustand verschlossen. Hierdurch wird erreicht, dass das Dehnvolumen 8 bereits den weiter oben genannten Unterdruck berücksichtigt, der im Hohlraum 4 bei erstarrtem Phasenwechselmaterial 6 herrschen soll.

Bei einer alternativen Ausführungsform ist es möglich, das als Schüttung-oder als Formkörper eingebrachte erstarrte Phasenwechselmaterial 6 innerhalb des jeweiligen Hohlraums 4 zunächst aufzuschmelzen, um dann den Hohlraum 4 bei verflüssigtem Phasenwechselmaterial 6 zu verschließen. Dabei kann die Temperatur des flüssigen Phasenwechselmaterials 6 an den erwarteten Betriebstemperaturbereich des Latentwärmespeichers 1 oder auf die maximale Betriebstemperatur des Latentwärmespeichers 1 abgestimmt sein.

Alternativ ist es ebenso möglich, das Phasenwechselmaterial 6 im verflüssigten Zustand in den jeweiligen Hohlraum 4 einzufüllen, um dann den Hohlraum 4 bei flüssigem Phasenwechselmaterial 6 zu verschließen. Auch hier sind wieder die Betriebstemperaturbereiche bzw. maximale Betriebstemperaturen des Latentwärmespeichers 1 ebenso wie die im Betrieb zu erwartenden Drücke berücksichtigbar.

## Patentansprüche

1. Latentwärmespeicher für eine Abgasanlage einer Brennkraftmaschine, insbesondere eines Kraftfahrzeugs,
- mit zumindest einem Hohlraum (4), der ein Speichervolumen (5) aufweist, das ein Phasenwechselmaterial (6) enthält,
- wobei das Speichervolumen (5) so bemessen ist, dass es ein Basisvolumen (7), welches das Phasenwechselmaterial (6) im erstarrten Zustand einnimmt, und ein Dehnvolumen (8) umfasst, welches das Phasenwechselmaterial (6) im geschmolzenen Zustand zusätzlich einnimmt,
- wobei der jeweilige Hohlraum (4) aus mehreren Teil-Hohlräumen (16) besteht, die über Umlenkstellen (17) und/oder Engstellen (18) miteinander kommunizierend verbunden sind,
**dadurch gekennzeichnet,**
**dass** in den Teil-Hohlräumen (16) eine Kapillarstruktur (13) vorgesehen ist, die beim Erstarren räumlich verteilte Mikrozonen (11) erzeugt, in denen die Erstarrung des Phasenwechselmaterials (6) erfolgt.

2. Latentwärmespeicher nach Anspruch 1,
**dadurch gekennzeichnet,**
**dass** das Dehnvolumen (8) eine Schmelzausdehnung (9) des Phasenwechselmaterials (6) und eine Temperaturausdehnung (10) des Phasenwechselmaterials (6) berücksichtigt, welche das flüssige Phasenwechselmaterial (6) bei einer vorbestimmten maximalen Betriebstemperatur des Latentwärmespeichers (1) erreicht.

3. Latentwärmespeicher nach Anspruch 1 oder 2,
**dadurch gekennzeichnet,**
**dass** das Dehnvolumen (8) einen vorbestimmten maximalen Betriebsdruck im jeweiligen Hohlraum (4) berücksichtigt, den das flüssige Phasenwechselmaterial (6) bei einer vorbestimmten maximalen Betriebstemperatur des Latentwärmespeichers (1) im Hohlraum (4) erzeugt.

4. Latentwärmespeicher nach einem der Ansprüche 1 bis 3
**dadurch gekennzeichnet,**
**dass** der jeweilige Hohlraum (4) dicht ist und dass das Dehnvolumen (8) so gewählt ist, dass sich bei erstarrtem Phasenwechselmaterial (6) darin ein Unterdruck ausbildet.

5. Latentwärmespeicher nach Anspruch 4,
**dadurch gekennzeichnet,**
**dass** das Dehnvolumen (8) so gewählt ist, dass sich bei erstarrtem Phasenwechselmaterial (6) ein vorbestimmter Unterdruck einstellt, der so bemessen ist, dass sich im flüssigen Phasenwechselmaterial (6) ein vorbestimmter Betriebsdruck ausbildet.

6. Latentwärmespeicher nach Anspruch 5,
**dadurch gekennzeichnet,**
**dass** der Unterdruck so bemessen ist, dass sich der vorbestimmte Betriebsdruck im flüssigen Phasenwechselmaterial (6) bei einem vorbestimmten Betriebstemperaturbereich des Latentwärmespeichers (1) ausbildet.

7. Latentwärmespeicher nach einem der Ansprüche 1 bis 6,
**dadurch gekennzeichnet,**
**dass** der jeweilige Hohlraum (4) an seinen Wänden (3) eine die Benetzung mit dem flüssigen Phasenwechselmaterial (6) verbessernde Oberflächenstruktur (15) aufweist.

8. Latentwärmespeicher nach einem der Ansprüche 1 bis 7,
**dadurch gekennzeichnet,**
**dass** der jeweilige Hohlraum (4) eine für das flüssige Phasenwechselmaterial (6) schwammartig wirkende räumliche Struktur (14) enthält.

9. Verfahren zum Befüllen eines Latentwärmespeichers (1) nach einem der Ansprüche 1 bis 8,
- bei dem das Phasenwechselmaterial (6) im erstarrten Zustand als Schüttung oder als mindestens ein Formkörper in den jeweiligen Hohlraum (4) eingebracht wird und der Hohlraum mit einem vorbestimmten Unterdruck beaufschlagt und verschlossen wird, oder
- bei dem das Phasenwechselmaterial im erstarrten Zustand als Schüttung oder als mindestens ein Formkörper in den jeweiligen Hohlraum (4) eingebracht wird und das Phasenwechselmaterial (6) im jeweiligen Hohlraum (4) geschmolzen wird und der Hohlraum (4) bei flüssigem Phasenwechselmaterial (6) verschlossen wird, oder
- bei dem das Phasenwechselmaterial (6) im flüssigen Zustand in den jeweiligen Hohlraum (4) eingefüllt wird und der Hohlraum (4) bei flüssigem Phasenwechselmaterial (6) verschlossen wird.

## Claims

1. A latent heat storage device for an exhaust system of a combustion engine, more preferably of a motor vehicle,
- with at least one hollow space (4) having a storage volume (5) which contains a phase-changing material (6),
- wherein the storage volume (5) is so dimensioned that it comprises a basic volume (7), which the phase-changing material (6) assumes in the solidified state, and an expansion volume (8), which the phase-changing material (6) additionally assumes in the molten state,
- the respective hollow space (4) consists of a plurality of hollow sub-spaces (16), which are connected with one another in a communicating manner via redirecting points (17) and/or narrow points (18),
**characterized in that**
in the hollow sub-spaces (16) is provided a capillary structure (13) which upon solidification creates spatially distributed microzones (11), in which the solidification of the phase-changing material (6) occurs.

2. The latent heat storage device according to Claim 1,
**characterized in that**
the expansion volume (8) takes into account a melt expansion (9) of the phase-changing material (6) and a temperature expansion (10) of the phase-changing material (6), which the liquid phase-changing material (6) reaches at a predetermined maximum operating temperature of the latent heat storage device (1).

3. The latent heat storage device according to Claim 1 or 2,
**characterized in that**
the expansion volume (8) takes into account a predetermined maximum operating pressure in the respective hollow space (4) which the liquid phase-changing material (6) generates in the hollow space (4) at a predetermined maximum operating temperature of the latent heat storage device (1).

4. The latent heat storage device according to any one of the Claims 1 to 3,
**characterized in that**
the respective hollow space (4) is tight and that the expansion volume (8) is so selected that with solidified phase-changing material (6) a vacuum is formed therein.

5. The latent heat storage device according to Claim 4,
**characterized in that**
the expansion volume (8) is so selected that with solidified phase-changing material (6) a predetermined vacuum is obtained which is so dimensioned that in the liquid phase-changing material (6) a predetermined operating pressure is formed.

6. The latent heat storage device according to Claim 5,
**characterized in that**
the vacuum is so dimensioned that the predetermined operating pressure in the liquid phase-changing material (6) is formed at a predetermined operating temperature range of the latent heat storage device (1).

7. The latent heat storage device according to any one of the Claims 1 to 6,
**characterized in that**
the respective hollow space (4) on its walls (3) comprises a surface structure (15) that improves the wetting with the liquid phase-changing material (6).

8. The latent heat storage device according to any one of the Claims 1 to 7,
**characterized in that**
the respective hollow space (4) comprises a spatial structure (14) which with respect to the liquid phase-changing material (6) has a sponge-like effect.

9. A method for the filling of a latent heat storage device (1) according to any one of the Claims 1 to 8,
- wherein the phase-changing material (6) in the solidified state is introduced in the respective hollow space (4) as bulk or as at least one shaped body and the hollow space is subjected to a predetermined vacuum and sealed, or
- wherein the phase-changing material in the solidified state is introduced in the respective hollow space (4) as bulk or as at least one shaped body and the phase-changing material (6) in the respective hollow space (4) is melted and the hollow space (4) with liquid phase-changing material (6) is sealed, or
- wherein the phase-changing material (6) in the liquid state is filled into the respective hollow space (4) and the hollow space (4) with liquid phase-changing material (6) is sealed.

## Revendications

1. Régulateur thermique à changement d'état pour un système d'échappement d'un moteur à combustion interne, en particulier d'un véhicule automobile,
- comprenant au moins une cavité (4), qui présente un volume de stockage (5), qui contient un matériau à changement de phase (6),
- le volume de stockage (5) présentant des dimensions telles qu'il comprend un volume de base (7), qui accueille le matériau à changement de phase (6) dans l'état solidifié, et un volume extensible (8), qui accueille le matériau à changement de phase (6) dans l'état fondu,
- la cavité (4) respective étant constituée de plusieurs cavités partielles (16), qui sont reliées en communication les unes avec les autres par l'intermédiaire de points de déviation (17) et/ou de points de rétrécissement (18),
**caractérisé en ce**
**qu'**une structure capillaire (13) est prévue dans les cavités partielles (16), laquelle génère, lors de la solidification, des microzones (11) réparties spatialement, dans lesquelles la solidification du matériau à changement de phase (6) a lieu.

2. Régulateur thermique à changement de phase selon la revendication 1,
**caractérisé en ce**
**que** le volume extensible (8) tient compte d'une extension par fusion (9) du matériau à changement de phase (6) et d'une extension thermique (10) du matériau à changement de phase (6), que le matériau à changement de phase (6) liquide atteint en présence d'une température de fonctionnement maximale prédéterminée du régulateur thermique à changement de phase (1).

3. Régulateur thermique à changement de phase selon la revendication 1 ou 2,
**caractérisé en ce**
**que** le volume extensible (8) tient compte d'une pression de fonctionnement maximale prédéterminée dans la cavité (4) respective, que le matériau à changement de phase (6) liquide produit dans la cavité (4) en présence d'une température de fonctionnement maximale prédéterminée du régulateur thermique à changement de phase (1).

4. Régulateur thermique à changement de phase selon l'une quelconque des revendications précédentes 1 à 3,
**caractérisé en ce**
**que** la cavité (4) respective est étanche, et en ce que le volume extensible (8) est choisi de telle manière qu'une dépression apparaît dans la cavité lorsque le matériau à changement de phase (6) est solidifié.

5. Régulateur thermique à changement de phase selon la revendication 4,
**caractérisé en ce**
**que** le volume extensible (8) est choisi de manière à régler, lorsque le matériau à changement de phase (6) est solidifié, une dépression prédéterminée, qui présente une valeur telle qu'une pression de fonctionnement prédéterminée apparaît dans le matériau à changement de phase (6) liquide.

6. Régulateur thermique à changement de phase selon la revendication 5,
**caractérisé en ce**
**que** la dépression présente une valeur telle que la pression de fonctionnement prédéterminée apparaît dans le matériau à changement de phase (6) liquide en présence d'une plage de températures de fonctionnement prédéterminée du régulateur thermique à changement de phase (1).

7. Régulateur thermique à changement de phase selon l'une quelconque des revendications 1 à 6,
**caractérisé en ce**
**que** la cavité (4) respective présente, au niveau de ses parois (3), une structure de surface (15) améliorant le mouillage avec le matériau à changement de phase (6) liquide.

8. Régulateur thermique à changement de phase selon l'une quelconque des revendications 1 à 7,
**caractérisé en ce**
**que** la cavité (4) respective contient une structure (14) spatiale agissant à la manière d'une éponge pour le matériau à changement de phase (6) liquide.

9. Procédé servant à remplir un régulateur thermique à changement de phase (1) selon l'une quelconque des revendications 1 à 8,
- le matériau à changement de phase (6) étant introduit, dans l'état solidifié, dans la cavité (4) respective, en vrac ou sous la forme au moins d'un corps moulé et la cavité étant soumise à l'action d'une dépression prédéterminée et étant fermée, ou
- le matériau à changement de phase étant introduit, dans l'état solidifié, dans la cavité (4) respective, en vrac ou sous la forme au moins d'un corps moulé et le matériau à changement de phase (6) étant fondu dans la cavité (4) respective et la cavité (4) étant fermé en présence d'un matériau à changement de phase (6) liquide, ou
- le matériau à changement de phase (6) étant transvasé dans la cavité (4) respective dans l'état liquide et la cavité (4) étant fermée en présence d'un matériau à changement de phase (6) liquide.
